# EUROPÄISCHE PATENTSCHRIFT

(11) **EP 2 230 047 B1**
(45) Veröffentlichungstag und Bekanntmachung des Hinweises auf die Patenterteilung: **22.04.2015**
(21) Anmeldenummer: 10155519.1
(22) Anmeldetag: 04.03.2010
(51) Int. Cl.: B24B 23/04, B24B 41/04, B25D 17/24, B25F 5/00, B27B 19/00, B23Q 11/00

(54) **Oszillationswerkzeug mit Vibrationsdämpfung**
Oscillation tool with vibration dampening
Outil d'oscillation doté d'un amortisseur de vibrations

(30) Priorität: 18.03.2009 DE 102009014970
(43) Veröffentlichungstag der Anmeldung: 22.09.2010
(73) Patentinhaber: C. & E. Fein GmbH, 73529 Schwäbisch Gmünd-Bargau (DE)
(72) Erfinder: Heilig, Mark, 71364 Winnenden (DE); Blickle, Jürgen, 73035 Göppingen (DE); Schreiber, Alfred, 73230 Kirchheim (DE)
(74) Vertreter: Witte, Weller & Partner Patentanwälte mbB

(56) Entgegenhaltungen:
- EP-A1- 1 415 768
- WO-A1-2005/102605
- WO-A1-2008/128804
- DE-A1-102006 059 336

## Beschreibung

Die Erfindung betrifft ein Oszillationswerkzeug mit einem Gehäuse, in dem ein Motor aufgenommen ist, der über ein Ozillationsgetriebe mit einer Antriebswelle zum Antrieb eines Werkzeugs gekoppelt ist, um diese um ihre Längsachse drehoszillierend anzutreiben.

Ein derartiges Oszillationswerkzeug ist aus der WO 2008/128804 A1 bekannt.

Bei dem bekannten Oszillationswerkzeug wird von einem Motor ein Ozillationsgetriebe in Form eines Exenterantriebs mit einer Antriebswelle gekoppelt, um diese um ihre Längsachse drehoszillierend anzutreiben.

Zum Schwingungsausgleich ist eine Massenausgleichseinrichtung vorgesehen, die ein Hubmassenteil umfasst, das in einer Schlittenführung verschieblich gelagert ist und vom Exzentergetriebe beaufschlagt ist. Das Hubmassenteil vollführt hierbei eine ausschließlich translatorische Verschiebebewegung, wozu die Schlittenführung eine Kulissenführung mit einer Kulissenbahn und einem darin geführten Führungsstift umfasst.

Derartige Oszillationswerkzeuge können in vielfältiger Weise, etwa zum Schleifen, aber auch zum Sägen oder Schneiden verwendet werden. Eine übliche Oszillationsfrequenz liegt im Bereich von etwa 5.000 bis 25.000 Oszillationen pro Minute, bei einem typischen Verschwenkwinkel zwischen etwa 0,5° und 7°.

Handwerkzeuge der eingangs genannten Art bieten eine hohe Flexibilität hinsichtlich ihrer möglichen Einsatzgebiete. Es hat sich jedoch gezeigt, dass bei derartigen Handwerkzeugen mit Oszillationsantrieb Vibrationen entstehen können, die die Handhabung beeinträchtigen können und vom Benutzer als unangenehm empfunden werden können.

Es besteht daher das Bestreben, die Vibrationen bei einem Oszillationswerkzeug so gering wie möglich zu halten. Die eingangs beschriebene Anordnung führt zwar zu einer Verringerung der Oszillationen, hat jedoch den Nachteil, dass Schiebeführungen notwendig sind, und dass die beteiligten Elemente infolge einer Gleitreibung einem gewissen Verschleiß unterliegen. Dies kann insbesondere dann nachteilig sein, wenn das Oszillationswerkzeug mit hoher Frequenz und gegebenenfalls mit großem Verschwenkwinkel angetrieben wird.

Der Erfindung liegt somit die Aufgabe zugrunde, ein verbessertes Oszillationswerkzeug zu schaffen, das möglichst vibrationsarm ausgebildet ist und gleichzeitig für einen Dauerbetrieb besonders geeignet ist. Hierbei soll insbesondere ein möglichst geringer Verschleiß im Dauerbetrieb erreicht werden.

Diese Aufgabe wird bei einem Oszillationswerkzeug gemäß der eingangs genannten Art dadurch gelöst, dass eine Schwungmasse vorgesehen ist, die über zumindest ein Federelement am Gehäuse beweglich gehalten ist, und dass die Schwungmasse ringförmig mit einer Ausnehmung ausgebildet, innerhalb derer die Schwungmasse mit mindestens zwei Federelementen am Gehäuse festgelegt ist. Hierbei ist die Ausnehmung vorzugsweise so ausgestaltet, dass der Schwerpunkt der Schwungmasse annähernd auf der Motorachse liegt.

Die Aufgabe der Erfindung wird auf diese Weise vollkommen gelöst.

Erfindungsgemäß wird nämlich eine Vibrationsdämpfung dadurch erzielt, dass eine an einem oder mehreren Federelementen frei beweglich aufgenommene Schwungmasse zur Vibrationsdämpfung verwendet wird. Hierdurch ergibt sich der besondere Vorteil, dass infolge der Aufhängung der Schwungmasse an mindestens einem Federelement eine gänzlich verschleißfreie Lösung erzielt wird. Je nach dem Anwendungsbereich kann hierbei das durch die Schwungmasse und die zugehörigen Federelement(e) gebildete Feder-Masse-System in geeigneter Weise an die Resonanzfrequenz oder Betriebsfrequenz des Oszillationsantriebes angepasst werden. Hierdurch ergibt sich eine besonders wirkungsvolle Dämpfung von Vibrationen.

Erfindungsgemäß kann die Schwungmasse ferner in unmittelbarer Nähe des Antriebs am Gehäuse aufgehängt werden, um so eine besonders wirkungsvolle Dämpfung von Vibrationen zu erzielen. Es können nur ein Federlement oder mehrere Federelemente zur Aufhängung vorgesehen sein.

Wird nur ein Federlement verwendet, so kann z.B. eine Führung vorgesehen sein, durch die sicher gestellt wird, dass sich die Schwungmasse nur in einer Ebene bewegen kann.

Auch können mehrere Federelemente vorgesehen sein, durch die eine Bewegung der Schwungmasse nur in einer Ebene sicher gestellt wird.

Gemäß einer weiteren Ausführung der Erfindung ist zumindest ein Federelement als Blattfeder ausgebildet.

Hiermit lässt sich eine hohe Steifigkeit in einer bestimmten Richtung gewährleisten, so dass eine Bewegung der Schwungmasse in nur einer Ebene leicht gewährleistet werden kann.

Gemäß einer weiteren Ausgestaltung der Erfindung weist das Ozillationsgetriebe eine Exzenterwelle auf, die von der Schwungmasse umschlossen ist.

Gemäß einer weiteren Ausführung der Erfindung weist der Motor eine Motorwelle auf, die von der Schwungmasse umschlossen ist.

In beiden Fällen kann die Schwungmasse in unmittelbarer Nähe des Ortes angeordnet werden, von dem die Vibrationen überwiegend ausgehen. So kann eine wirkungsvolle Vibrationsdämpfung der Antriebseinheit erreicht werden.

Gemäß einer weiteren Ausführung der Erfindung ist die Schwungmasse an einem dem Werkzeug abgewandten Ende des Motors angeordnet.

Auch auf diese Weise kann eine sehr wirkungsvolle Vibrationsdämpfung erzielt werden. Infolge des größeren Abstandes zu dem Ort, von dem der überwiegende Anteil der Vibrationen ausgeht, ergibt sich ein größerer Hebelarm, so dass eine kleinere Schwungmasse zur Vibrationsdämpfung ausreichend ist.

Gemäß einer weiteren Ausgestaltung der Erfindung weisen die Federelemente eine veränderbare Federcharakteristik auf.

Diese Maßnahme hat den Vorteil, dass so die Resonanzfrequenz des durch die Schwungmasse, die Federelemente und die Aufhängung gebildeten Feder-Masse-Systems auf unterschiedliche Schwingungsfrequenzen, gegebenenfalls auch lastabhängig, angepasst werden kann.

Hierzu kann die Federcharakteristik der Federelemente beispielsweise mittels eines elektromechanischen Elementes, z.B. in Form eines Piezoelementes veränderbar sein. Alternativ kann auch ein mechanisches Element vorgesehen sein, z.B. eine einstellbare Schraube, etwa um die Vorspannung zu verändern.

Ferner kann auch eine Dämpfung, z.B. in Form eines Reibelementes vorgesehen sein, die auf die Schwungmasse einwirkt. Dabei kann die Dämpfung veränderbar sein. Hierdurch lässt sich das Feder-Masse-System verstimmen.

So lässt sich ein größerer Bereich von Vibrationsfrequenzen dämpfen.

Gemäß einer weiteren Ausgestaltung der Erfindung ist eine Mehrzahl von Schwungmassen am Gehäuse aufgenommen.

Diese Maßnahme hat den Vorteil, dass eine bessere Abstimmung zur Dämpfung von unterschiedlichen Frequenzen ermöglicht wird.

Hierzu können die Schwungmassen vorzugsweise auf unterschiedliche Resonanzfrequenzen abgestimmt sein.

Gemäß einer weiteren Ausführung der Erfindung sind die Schwungmassen nebeneinander am Gehäuse festgelegt.

In Abwandlung hiervon können die Schwungmassen auch an unterschiedlichen Positionen im Bereich der Motorwelle, der Exzenterwelle oder am dem Werkzeug abgewandten Ende des Motors angeordnet sein.

Somit kann eine optimierte Anpassung zur Minimierung der entstehenden Vibrationen erreicht werden.

Vorzugsweise ist die Resonanzfrequenz eines durch die Schwungmasse in Verbindung mit der Aufhängung an den Federelementen gebildeten Feder-Masse-Systems auf die Betriebsfrequenz des Oszillationswerkzeugs abgestimmt.

Auf diese Weise ergibt sich eine besonders wirkungsvolle Vibrationsdämpfung.

Weitere Merkmale und Vorteile der Erfindung ergeben sich aus der nachfolgenden Beschreibung eines bevorzugten Ausführungsbeispiels unter Bezugnahme auf die Zeichnung. Es zeigen:
- Fig. 1: einen vereinfachten Teilschnitt durch ein erfindungsgemäßes Oszillationswerkzeug im Bereich seines Ozillationsgetriebes und
- Fig. 2: einen Schnitt durch das Oszillationswerkzeug gemäß Fig. 1 längs der Linie II-II.

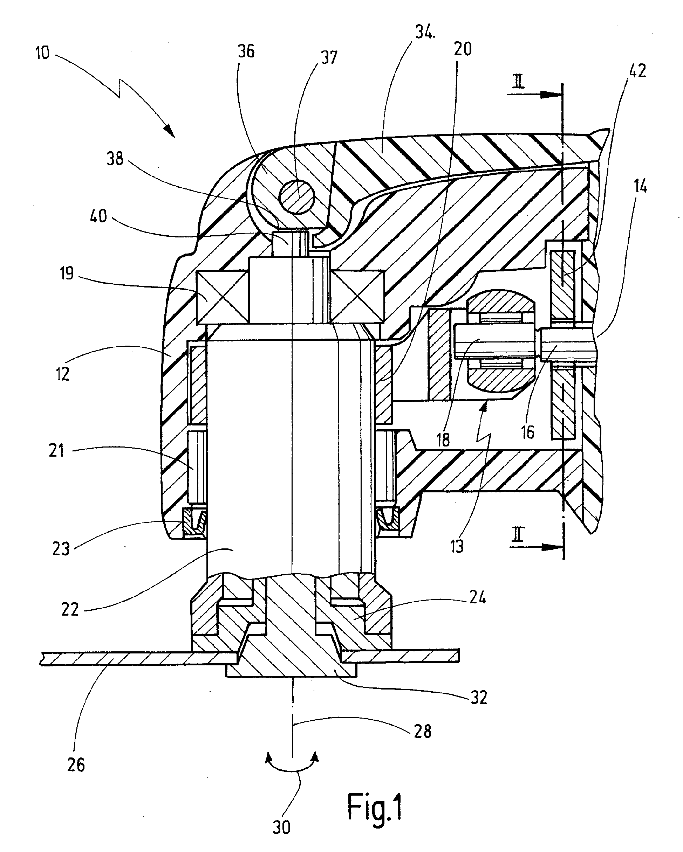

In Fig. 1 ist ein erfindungsgemäßes Oszillationswerkzeug vereinfacht dargestellt und insgesamt mit der Ziffer 10 bezeichnet.

Das Oszillationswerkzeug 10 weist ein Gehäuse 12 auf, in dem ein Motor 14 und ein insgesamt mit der Ziffer 13 bezeichnetes Ozillationsgetriebe vorgesehen sind, wovon eine Antriebswelle 22 um ihre Längsachse 28 drehoszillierend angetrieben wird, wie durch den Doppelpfeil 30 angedeutet ist. Der Antrieb erfolgt hierbei mit hoher Frequenz von z.B. 5.000 bis 25.000 Oszillationen pro Minute und mit einem geringen Verschwenkwinkel, der typischerweise im Bereich zwischen 0,5° und 7° liegt.

Die Drehbewegung der Motorwelle 16 wird über das Ozillationsgetriebe 13 in die Drehschwenkbewegung der Antriebswelle 22 umgesetzt. Hierzu ist die Antriebswelle 22 drehfest mit einer Schwinggabel 20 verbunden, die von einem mit der Motorwelle 16 verbundenen Exenterabschnitt 18 oszillierend angetrieben wird.

Die Antriebswelle 22 ist mittels Lagern 19, 21 im Gehäuse 12 gelagert und nach außen hin durch eine Dichtung 23 abgedichtet. Am äußeren Ende der Antriebswelle 22 ist ein Flansch 24 vorgesehen, der mit der Antriebswelle 22 formschlüssig verbunden ist. Gegen den Flansch 24 kann ein Werkzeug 26, beispielsweise ein dreieckförmiges Schleifwerkzeug, mittels eines Spannelementes 32 verspannt werden und hierbei (in nicht näher dargestellter Weise) formschlüssig mit der Antriebswelle 22 verbunden werden.

Das Oszillationswerkzeug 10 weist ferner in grundsätzlich aus der WO 2005/102605 A1 bekannter Weise eine Schnellspanneinrichtung auf, um ein schnelles Wechseln des Werkzeuges ohne Zuhilfenahme eines Zusatzwerkzeuges zu ermöglichen. Hierzu wird die Spannkraft durch ein in der Antriebswelle 22 aufgenommenes Federpaket (nicht dargestellt) erzeugt. Über ein Druckstück 40 am oberen Ende der Antriebswelle 22 kann das Federpaket entlastet werden, so dass das Spannelement 32 aus der Antriebswelle 22 herausgezogen werden kann, um das Werkzeug 26 zu wechseln. Zum Verschieben des Druckstückes 40 dient ein Spannhebel 34 mit einem Exzenter 36, der um eine Achse 37 verschwenkbar ist. Die Einzelheiten dieser Schnellspanneinrichtung sind grundsätzlich bekannt und werden hier nicht näher beschrieben. Für weitere Details wird auf die WO 2005/102605 A1 verwiesen, die vollständig durch Bezugnahme eingeschlossen wird.

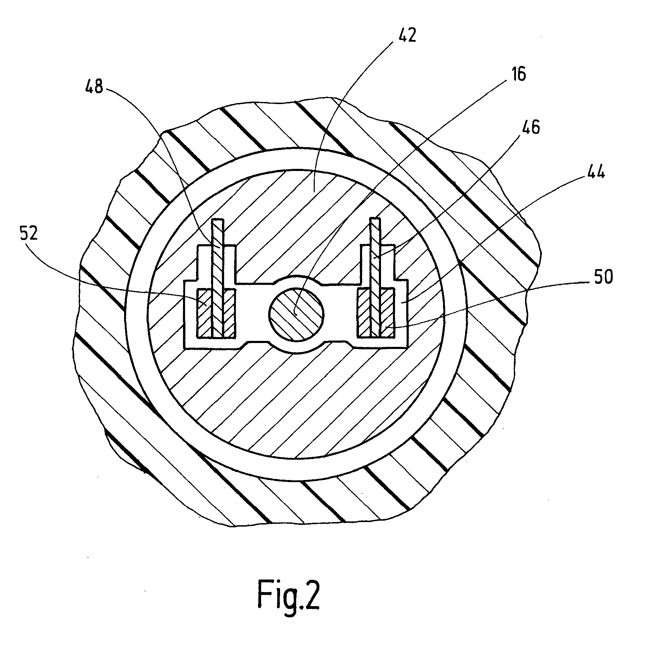

Zur Dämpfung von Vibrationen weist das Oszillationswerkzeug 10 eine Schwungmasse 42 auf, die im Bereich der Motorwelle 16 am Gehäuse 12 frei schwingend aufgehängt ist, wie im Einzelnen näher aus Fig. 2 zu ersehen ist. Die Schwungmasse 42 ist ringförmig ausgebildet und weist eine zentrale Ausnehmung 44 auf, innerhalb derer die Schwungmasse 42 mittels zweier Blattfederelemente 46, 48 unmittelbar am Gehäuse 12 mittels zweier Befestigungen 50, 52 festgelegt ist.

Die Schwungmasse 42 bildet somit zusammen mit den beiden Blattfedern 46, 48 ein Feder-Masse-System, das eine passive Vibrationsdämpfung ermöglicht. Hierbei ist die Resonanzfrequenz des Feder-Masse-Systems in geeigneter Weise auf die Resonanzfrequenz(en) des Oszillationsantriebes 13 abgestimmt.

Bei dem hier dargestellten Beispiel ergab sich mit einer Schwungmasse von 100 g bei der dargestellten Form eine Resonanzfrequenz von 300 Hz mit Oberfrequenzen bei 600 und 900 Hz, womit eine wirkungsvolle Vibrationsdämpfung insbesondere in diesen Bereichen erzielt werden konnte. Es ergab sich eine Reduktion der Beschleunigungswerte bei 300 Hz und 900 Hz auf etwa 50 % der Werte ohne die Schwungmasse 42.

Im dargestellten Fall gemäß Fig. 2 ist die Schwungmasse 42 am Ende der Motorwelle 16 kurz vor dem Übergang zum Exenterabschnitt 18 angeordnet.

Es sind jedoch auch verschiedene andere Anordnungen denkbar, insbesondere eine Anordnung der Schwungmasse 42 näher am Exenterabschnitt 18 oder im Bereich des Exzenterabschnitts 18. Ferner könnte die Schwungmasse 42 auch am gegenüberliegenden Ende des Motors 14 angeordnet sein.

Schließlich ist es denkbar, die Federcharakteristik der Federelemente 46, 48 veränderbar zu machen, beispielsweise mit Hilfe von Piezoelementen. Ggf. könnten auch die Federelemente 46, 48 selbst durch Piezoelemente ersetzt sein. Durch eine einstellbare Federcharakteristik lässt sich die Resonanzfrequenz des durch die Federelemente 46, 48 und die Schwungmasse 42 gebildeten Feder-Masse-Systems anpassen, so dass eine Anpassung an die während des Betriebs auftretenden Schwingungen ermöglicht ist.

Hierzu könnte auch ein Schwingungssensor, etwa in Form eines Piezosensors, vorgesehen sein, um eine automatische Anpassung zu ermöglichen. Alternativ oder zusätzlich könnte auch eine Dämpfung z.B. in Form eines Reibelementes vorgesehen sein.

## Patentansprüche

1. Oszillationswerkzeug mit einem Gehäuse (12), in dem ein Motor (14) aufgenommen ist, der über ein Ozillationsgetriebe (13) mit einer Antriebswelle (24) zum Antrieb eines Werkzeugs (26) gekoppelt ist, um diese um ihre Längsachse (28) drehoszillierend anzutreiben, **dadurch gekennzeichnet, dass** eine Schwungmasse (42) vorgesehen ist, die über mindestens ein Federelement (46, 48) am Gehäuse beweglich gehalten ist, und dass die Schwungmasse (42) ringförmig mit einer Ausnehmung (44) ausgebildet ist, innerhalb derer die Schwungmasse (42) mit mindestens einem Federelement, vorzugsweise mit zwei Federelementen (46, 48) am Gehäuse (12) festgelegt ist.

2. Oszillationswerkzeug nach Anspruch 1, **dadurch gekennzeichnet, dass** das zumindest eine Federelement (46, 48) so ausgebildet ist, dass sich die Schwungmasse (42) nur in einer Ebene bewegen kann.

3. Oszillationswerkzeug nach einem der vorhergehenden Ansprüche, **dadurch gekennzeichnet, dass** zumindest ein Federelement (46, 48) als Blattfeder ausgebildet ist.

4. Oszillationswerkzeug nach einem der Ansprüche 1 bis 3, **dadurch gekennzeichnet, dass** das Oszillationsgetriebe (13) eine Exzenterwelle (18) aufweist, die von der Schwungmasse (42) umschlossen ist.

5. Oszillationswerkzeug nach einem der Ansprüche 1 bis 4, **dadurch gekennzeichnet, dass** der Motor (14) eine Motorwelle (16) aufweist, die von der Schwungmasse (42) umschlossen ist.

6. Oszillationswerkzeug nach einem der vorhergehenden Ansprüche, **dadurch gekennzeichnet, dass** die Schwungmasse (42) an einem dem Werkzeug (26) abgewandten Ende des Motors (14) angeordnet ist.

7. Oszillationswerkzeug nach einem der vorhergehenden Ansprüche, **dadurch gekennzeichnet, dass** zumindest ein Federelement (46, 48) eine veränderbare Federcharakteristik aufweist.

8. Oszillationswerkzeug nach Anspruch 7, **dadurch gekennzeichnet, dass** eine Mechanik oder eine elektromechanische Einrichtung, insbesondere ein Piezoelement, zur Veränderung der Federcharakteristik vorgesehen ist.

9. Oszillationswerkzeug nach Anspruch 7 oder 8, **dadurch gekennzeichnet, dass** eine vorzugsweise einstellbare Dämpfung für das zumindest eine Federelement (46, 48) vorgesehen ist, vorzugsweise ein Reibelement, an dem zumindest einen Federelement (46, 48) angreift.

10. Oszillationswerkzeug nach einem der vorhergehenden Ansprüche, **dadurch gekennzeichnet, dass** eine Mehrzahl von Schwungmassen (42) am Gehäuse (12) aufgenommen ist, die vorzugsweise nebeneinander am Gehäuse (12) festgelegt sind.

11. Oszillationswerkzeug nach Anspruch 10, **dadurch gekennzeichnet, dass** die Schwungmassen (42) auf unterschiedliche Resonanzfrequenzen abgestimmt sind.

12. Oszillationswerkzeug nach Anspruch 10 oder 11, **dadurch gekennzeichnet, dass** die Schwungmassen (42) an unterschiedlichen Positionen im Bereich der Motorwelle (16), der Exzenterwelle (18) oder am dem Werkzeug (26) abgewandten Ende des Motors (14) angeordnet sind.

13. Oszillationswerkzeug nach einem der vorhergehenden Ansprüche, **dadurch gekennzeichnet, dass** die Resonanzfrequenz eines durch die Schwungmasse (42) in Verbindung mit der Aufhängung an dem zumindest einen Federelement (46, 48) gebildeten Feder-Masse-Systems auf die Betriebsfrequenz des Oszillationswerkzeuges (10) abgestimmt ist.

14. Oszillationswerkzeug nach Anspruch 13, **dadurch gekennzeichnet, dass** ein Vibrationssensor vorgesehen ist, der mit dem zumindest einen Federelement (46, 48) zur automatischen Anpassung der Resonanzfrequenz während des Betriebs gekoppelt ist.

## Claims

1. An oscillating tool comprising a housing (12) that accommodates a motor (14) which for driving a tool is coupled with a drive shaft (24) via an oscillation drive (13) for driving it rotatingly oscillatingly about its longitudinal axis (28), **characterized in that** an inertial mass (42) is provided that is movably held on the housing via at least one spring element (46, 48), and **in that** the inertial mass (42) has an annular shape with an opening (44) in which the inertial mass (42) is fixed on the housing (12) by at least one spring element, preferably by two spring elements (46, 48).

2. The oscillating tool of claim 1, **characterized in that** the at least one spring element (46, 48) is configured so as to ensure that the inertial mass (42) can move in one plane only.

3. The oscillating tool of any of the preceding claims, **characterized in that** at least one spring element (46, 48) is designed as a leaf spring.

4. The oscillating tool of any of claims 1 to 3, **characterized in that** the oscillation drive (13) comprises an eccentric shaft (18) that is enclosed by the inertial mass (42).

5. The oscillating tool of any of claims 1 to 4, **characterized in that** the motor (14) comprises a motor shaft (16) that is enclosed by the inertial mass (42).

6. The oscillating tool of any of the preceding claims, **characterized in that** the inertial mass (42) is arranged on an end of the motor (14) opposite the tool (26).

7. The oscillating tool of any of the preceding claims, **characterized in that** at least one spring element (46, 48) has a variable spring characteristic.

8. The oscillating tool of claim 7, **characterized in that** a mechanism or an electromechanical system, in particular a piezoelectric element, is provided for varying the spring characteristic.

9. The oscillating tool of claim 7 or claim 8, **characterized in that** a damping is provided, preferably a friction element, that is acted upon by at least one spring element (46, 48) and that preferably is adjustable.

10. The oscillating tool of any of the preceding claims, **characterized in that** a plurality of inertial masses (42) are received on the housing (12), which, preferably, are fixed to the housing (12) one beside the other.

11. The oscillating tool of claim 10, **characterized in that** the inertial masses (42) are tuned to different resonant frequencies.

12. The oscillating tool of claim 10 or 11, **characterized in that** the inertial masses (42) are arranged in different positions in the area of the motor shaft (16), the eccentric shaft (18) or on the end of the motor (14) opposite the tool (26).

13. The oscillating tool of any of the preceding claims, **characterized in that** the resonant frequency of a spring-mass system constituted by the inertial mass (42) in combination with the suspension on the at least one spring element (46, 48) is tuned to the operating frequency of the oscillating tool (10).

14. The oscillating tool of claim 13, **characterized in that** a vibration sensor is provided which is coupled with the at least one spring element (46, 48) for automatic adaptation of the resonant frequency during operation.

## Revendications

1. Outil oscillant comprenant un boîtier (12) dans lequel est reçu un moteur (14) qui est accouplé à un arbre d'entraînement (24) par le biais d'une transmission oscillante (13) pour l'entraînement d'un outil (26), afin d'entraîner celui-ci de manière oscillante en rotation autour de son axe longitudinal (28), **caractérisé en ce qu'**une masse d'inertie (42) est prévue, laquelle est retenue de manière mobile sur le boîtier par le biais d'au moins un élément ressort (46, 48), et **en ce que** la masse d'inertie (42) est réalisée de manière annulaire avec un évidement (44) à l'intérieur duquel la masse d'inertie (42) est fixée sur le boîtier (12) à l'aide d'au moins un élément ressort, de préférence à l'aide de deux éléments ressort (46, 48).

2. Outil oscillant selon la revendication 1, **caractérisé en ce que** l'au moins un élément ressort (46, 48) est réalisé de telle sorte que la masse d'inertie (42) ne puisse se déplacer que dans un plan.

3. Outil oscillant selon l'une quelconque des revendications précédentes, **caractérisé en ce qu'**au moins un élément ressort (46, 48) est réalisé sous forme de ressort à lame.

4. Outil oscillant selon l'une quelconque des revendications 1 à 3, **caractérisé en ce que** la transmission oscillante (13) comprend un arbre à excentrique (18) qui est entouré par la masse d'inertie (42).

5. Outil oscillant selon l'une quelconque des revendications 1 à 4, **caractérisé en ce que** le moteur (14) comprend un arbre de moteur (16) qui est entouré par la masse d'inertie (42).

6. Outil oscillant selon l'une quelconque des revendications précédentes, **caractérisé en ce que** la masse d'inertie (42) est disposée à une extrémité du moteur (14) opposée à l'outil (26).

7. Outil oscillant selon l'une quelconque des revendications précédentes, **caractérisé en ce qu'**au moins un élément ressort (46, 48) présente une caractéristique de ressort modifiable.

8. Outil oscillant selon la revendication 7, **caractérisé en ce qu'**un mécanisme ou un dispositif électromécanique, en particulier un élément piézo-électrique, est prévu pour modifier la caractéristique de ressort.

9. Outil oscillant selon la revendication 7 ou 8, **caractérisé en ce qu'**un amortissement de préférence réglable pour l'au moins un élément ressort (46 48) est prévu, de préférence un élément de frottement sur lequel agit au moins un élément ressort (46, 48).

10. Outil oscillant selon l'une quelconque des revendications précédentes, **caractérisé en ce qu'**une pluralité de masses d'inertie (42) sont reçues sur le boîtier (12), lesquelles sont de préférence fixées les unes à côté des autres sur le boîtier (12).

11. Outil oscillant selon la revendication 10, **caractérisé en ce que** les masses d'inertie (42) sont accordées sur différentes fréquences de résonance.

12. Outil oscillant selon la revendication 10 ou 11, **caractérisé en ce que** les masses d'inertie (42) sont disposées à différentes positions dans la région de l'arbre de moteur (16), de l'arbre à excentrique (18) ou à l'extrémité du moteur (14) opposée à l'outil (26).

13. Outil oscillant selon l'une quelconque des revendications précédentes, **caractérisé en ce que** la fréquence de résonance d'un système ressort-masse formé par la masse d'inertie (42) en association avec la suspension sur l'au moins un élément ressort (46, 48) est accordée sur la fréquence de fonctionnement de l'outil oscillant (10).

14. Outil oscillant selon la revendication 13, **caractérisé en ce qu'**un capteur de vibrations est prévu, lequel est accouplé à l'au moins un élément ressort (46, 48) pour adapter automatiquement la fréquence de résonance pendant le fonctionnement.
